Europäisches Patentamt

European Patent Office

Office européen des brevets

(19)

(11) **EP 0 569 739 B1**

(12) **EUROPÄISCHE PATENTSCHRIFT**

(45) Veröffentlichungstag und Bekanntmachung des Hinweises auf die Patenterteilung:
**26.06.1996 Patentblatt 1996/26**

(51) Int Cl.6: **F24D 19/00**, F24D 19/10

(21) Anmeldenummer: **93106435.6**

(22) Anmeldetag: **21.04.1993**

(54) **Verfahren zur Steuerung einer Umwälzpumpe einer Heizanlage und Vorrichtung zur Durchführung des Verfahrens**

Method and apparatus for controlling a pump in a heating system

Procédé et dispositif pour régler une pompe dans une installation de chauffage

(84) Benannte Vertragsstaaten:
**CH DE DK FR LI SE**

(30) Priorität: **12.05.1992 CH 1511/92**

(43) Veröffentlichungstag der Anmeldung:
**18.11.1993 Patentblatt 1993/46**

(73) Patentinhaber: **Landis & Gyr Technology Innovation AG**
**CH-6301 Zug (CH)**

(72) Erfinder: **Marbach, Kuno**
**CH-6043 Adligenswil (CH)**

(74) Vertreter: **Müller, Hans-Jürgen, Dipl.-Ing. et al**
**Müller, Schupfner & Gauger**
**Postfach 10 11 61**
**80085 München (DE)**

(56) Entgegenhaltungen:
**DE-A- 4 004 392**      **DE-A- 4 033 163**

## Beschreibung

Die Erfindung bezieht sich auf ein Verfahren zur Steuerung einer Umwälzpumpe einer Heizanlage gemäß dem Oberbegriff des Anspruchs 1 und eine Vorrichtung zur Durchführung des Verfahrens gemäß dem Oberbegriff des Anspruchs 7.

Es ist bekannt, die Umwälzpumpe einer Heizanlage dann abzuschalten, wenn in der Heizanlage kein Wärmebedarf besteht. Dieser Fall tritt beispielsweise regelmäßig dann ein, wenn am Ende eines Tages der Raumtemperatur-Sollwert von einem höheren auf einen tieferen Wert umgeschaltet wird, um während der Nacht Energie einzusparen. Durch das Abschalten der Umwälzpumpe wird ebenfalls Energie eingespart und außerdem werden nachts besonders störende Strömungsgeräusche vermieden. Das Abschalten der Umwälzpumpe muß jedoch dann unterbleiben, wenn für die Heizungsanlage die Gefahr des Einfrierens während kalter Nächte besteht.

Aus der DE-PS 29 37 318 ist eine Steuereinrichtung bekannt, durch die die Umwälzpumpe einer Heizungsanlage bei Frostgefahr eingeschaltet wird.

Aus der DE-OS 40 33 163 ist ein Steuerverfahren für eine Heizungsanlage bekannt, bei dem zur Vermeidung des Einfrierens von Leitungsteilen die Umwälzpumpe wenigstens zeitweise und intermittierend dann in Betrieb gesetzt wird, wenn die Außentemperatur einen bestimmten Vergleichswert unterschreitet und die Umwälzpumpe schon eine gewisse Zeit außer Betrieb war.

Der Erfindung liegt die Aufgabe zugrunde, ein Verfahren zur Steuerung einer Umwälzpumpe anzugeben, durch das einerseits das Einfrieren von Leitungsteilen sicher verhindert wird, durch das aber andererseits die Laufzeit der Umwälzpumpe auf das unumgängliche Mindestmaß begrenzt wird, sowie eine entsprechende Vorrichtung zu schaffen.

Die genannte Aufgabe wird erfindungsgemäß durch die Merkmale des Anspruchs 1 gelöst. Eine Vorrichtung zur Durchführung des Verfahrens ist im Anspruch 7 gekennzeichnet. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen

Fig. 1 ein Temperatur- und Schaltzustands-Diagramm und

Fig. 2 Einzelheiten eines Heizungsreglers.

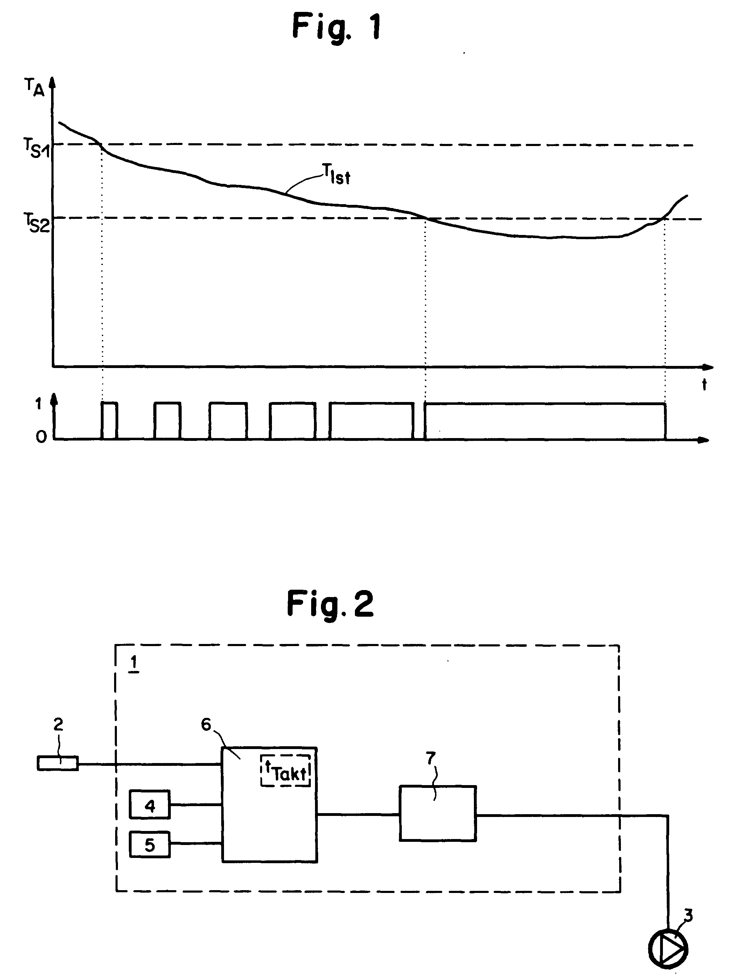

Die Fig. 1 zeigt ein Diagramm, dessen oberer Teil einen angenommenen zeitlichen Verlauf der mit einem Außentemperaturfühler gemessenen Außentemperatur darstellt, wobei zusätzlich zwei Bezugslinien eingezeichnet sind: eine erste Temperaturschwelle $T_{S1}$, und eine zweite Temperaturschwelle $T_{S2}$. Im unteren Teil des Diagramms ist der Schaltzustand einer Umwälzpumpe des Heizungsnetzes dargestellt, wobei "0" den Schaltzustand "Aus" und "1" den Schaltzustand "Ein" bedeutet.

In der Fig. 1 ist mit $T_{Ist}$ der angenommene Verlauf der Außentemperatur bezeichnet. Am Beginn der willkürlichen Zeitachse liegt die Außentemperatur höher als die erste Temperaturschwelle $T_{S1}$. Die Umwälzpumpe ist ausgeschaltet, denn oberhalb der Temperaturschwelle $T_{S1}$, besteht keine Gefahr des Einfrierens von Teilen der wasserführenden Leitungen des Heizungsnetzes.

Ausgehend von diesem Zustand ist nun in der Fig. 1 dargestellt, daß die Außentemperatur $T_{Ist}$ fällt. Sobald diese die erste Temperaturschwelle $T_{S1}$ unterschreitet, schaltet die Umwälzpumpe unverzögert ein. Solange die Außentemperatur $T_{Ist}$ unterhalb der ersten Temperaturschwelle $T_{S1}$, aber oberhalb der zweiten Temperaturschwelle $T_{S2}$ liegt, wird die Umwälzpumpe periodisch ein- und ausgeschaltet, wobei das EIN-AUS-Taktverhältnis durch das Ausmaß der Unterschreitung der ersten Temperaturschwelle $T_{S1}$ bestimmt ist, und zwar derart, daß die Dauer des AUS-Taktes umso kleiner ist, je größer die Unterschreitung ist. Die Umwälzpumpe wird dauernd eingeschaltet, wenn die Außentemperatur $T_{Ist}$ unterhalb der zweiten Temperaturschwelle $T_{S2}$ liegt.

Statt der Angabe des EIN-AUS-Taktverhältnisses kann auch die relative Pausendauer, nachfolgend mit dem Buchstaben $\varepsilon$ bezeichnet, angegeben werden. Wird eine feste Taktzeit $t_{Takt}$ angenommen, d. h. daß die Länge eines EIN-AUS-Taktzyklus konstant ist, so ergibt sich die jeweilige Ausschaltdauer als Produkt von Taktzeit $t_{Takt}$ und relativer Pausendauer $\varepsilon$. Vorteilhaft wird die relative Pausendauer $\varepsilon$ gemäß der folgenden Beziehung berechnet:

$$\varepsilon = \frac{T_{Ist} - T_{S2}}{T_{S1} - T_{S2}}$$

Werte gleich oder größer 1 bedeuten dabei, daß die Umwälzpumpe dauernd ausgeschaltet ist. Werte zwischen 0 und 1 bedeuten, daß die Umwälzpumpe im Taktbetrieb periodisch ein- und ausgeschaltet wird. Ein Wert gleich Null entspricht dem Dauerlauf der Umwälzpumpe und negative Werte bedeuten gleichermaßen den Dauerlauf der Umwälzpumpe.

Es ist im Rahmen der Erfindung möglich, wie zuvor angegeben die Taktzeit $t_{Takt}$ konstant zu lassen, so daß sich mit steigender Einschaltdauer der Umwälzpumpe die Pausendauer verkleinert, wie das auch der Fig. 1 zu entnehmen ist.

Es kann aber vorteilhaft sein, die Einschaltdauer konstant zu wählen und nur die Pausendauer zu variieren. Die Einschaltdauer kann vorteilhaft eine anlagenspezifische Größe sein, die einstellbar ist. Die Größe dieser Einschaltdauer ist dabei so groß zu wählen, daß während eines Einschaltzyklus das Wasser in der Heizungsanlage mindestens einmal vollkommen umgewälzt wird. Je größer das Wasservolumen der Heizungsanlage ist, desto größer ist die Einschaltdauer zu wählen.

Die vorgenannten Temperaturschwellen $T_{S1}$ und $T_{S2}$ können beispielsweise folgende Werte aufweisen:

Temperaturschwelle $T_{S1}$      +1 Grad Celsius
Temperaturschwelle $T_{S2}$      -10 Grad Celsius

Die Taktzeit $t_{Takt}$ kann beispielsweise 3 Stunden betragen. Je nach Art und Bauweise von Heizungsanlage und Gebäude, wobei es insbesondere auf die vorhandenen Isolationsmaßnahmen ankommt, können die Werte von den vorgenannten Daten abweichen.

Es ist vorteilhaft, die Pausendauer zu begrenzen. Einerseits soll die Pausendauer nicht unendlich sein, denn es ist bekannt, daß Umwälzpumpen bei längerem Stillstand zum Blockieren neigen. Es ist also vorteilhaft, die Umwälzpumpe grundsätzlich periodisch einzuschalten, beispielsweise aller 24 Stunden, denn bei Nichtwohnbauten kommen lange Pausen zwischen den Komfortperioden, während denen auf Behaglichkeit hin geheizt wird, durchaus vor. Es ist deshalb vorteilhaft, die Pausendauer unabhängig von der Unterschreitung einer der Temperaturschwellen auf einen Maximalwert $t_{Pmax}$ von beispielsweise 24 Stunden zu begrenzen.

Andererseits kann der Fall eintreten, daß sich bei der Berechnung der Pausendauer gemäß der zuvor angegebenen Formel ein sehr kleiner Wert ergibt, beispielsweise 30 Sekunden. Da in einer so kleinen Zeitspanne ein Einfrieren ohnehin nicht möglich ist, ist es vorteilhaft, eine minimale Pausendauer $t_{Pmin}$ von beispielsweise 20 Minuten vorzusehen.

Die Fig. 2 zeigt eine Vorrichtung zur Durchführung des Verfahrens, nämlich einen Heizungsregler 1, an den ein Außentemperaturfühler 2 angeschlossen ist und der eine Umwälzpumpe 3 steuert. Im Heizungsregler 1 sind nur jene Einzelheiten dargestellt, die für die Verwirklichung des vorgenannten Steuerverfahrens für die Umwälzpumpe 3 von Bedeutung sind.

Diese Einzelheiten sind: ein erster Sollwertgeber 4, der den Wert der Temperaturschwelle $T_{S1}$ bestimmt, ein zweiter Sollwertgeber 5, der den Wert der Temperaturschwelle $T_{S2}$ bestimmt, ein Rechenglied 6 und ein Schaltglied 7.

Die Sollwertgeber 4 und 5 und der Außentemperaturfühler 2 sind an je einen Eingang des Rechenglieds 6 angeschlossen. Ein Ausgang des Rechenglieds 6 ist mit einem Eingang des Schaltglieds 7 verbunden, an dessen Ausgang die Umwälzpumpe 3 angeschlossen ist.

Das Rechenglied 6 enthält einen festen, jedoch vorzugsweise veränderbaren Wert für die Taktzeit $t_{Takt}$ und ermittelt aus den Werten der Temperaturschwellen $T_{S1}$ und $T_{S2}$ und der Außentemperatur $T_{Ist}$ gemäß den vorgenannten Beziehungen das EIN-AUS-Taktverhältnis bzw. die relative Pausendauer $\varepsilon$ bzw. die effektiven EIN- und AUS-Schaltzeiten. Das Rechenglied 6 kann einen internen Timer enthalten oder aber durch eine im Heizungsregler 1 ohnehin enthaltene Zeituhr beeinflußt sein. Am Ausgang des Rechengliedes 6 erscheint ein Logiksignal, das bestimmt, ob die Umwälzpumpe 3 ein- oder ausgeschaltet sein soll. Dieses Logiksignal wird dem Schaltglied 7 zugeführt, das entsprechend diesem Logiksignal die Umwälzpumpe 3 schaltet.

Im Falle eines digital arbeitenden Heizungsreglers 1 sind die genannten Elemente durch Programmteile bzw. Speicherplätze nachgebildet.

Durch das periodische Einschalten der Umwälzpumpe 3 wird auch sichergestellt, daß das in den der Auskühlung am meisten ausgesetzten Teilen der Heizanlage befindliche Heizungsmedium an den in der Heizanlage eingebauten Temperaturfühlern, z. B. Vorlauf- und Kesseltemperaturfühler, vorbeigeführt wird, so daß entsprechend der fortschreitenden Auskühlung auch rechtzeitig der Wärmeerzeuger durch die dafür bestimmten Mittel in Betrieb gesetzt wird.

**Patentansprüche**

1. Verfahren zur Steuerung einer Umwälzpumpe (3) einer mit einem Wärmeerzeuger und frostgefährdeten Leitungsteilen ausgestatteten Heizanlage mittels eines Heizungsreglers (1), der von einem Außentemperaturfühler (2) beeinflußt wird und mindestens einen Sollwertgeber aufweist, dadurch gekennzeichnet, daß die Umwälzpumpe (3) periodisch ein- und ausgeschaltet wird, wenn die Außentemperatur ($T_{Ist}$) einen ersten Schwellenwert ($T_{S1}$) unterschreitet, wobei das EIN-AUS-Taktverhältnis durch das Ausmaß der Unterschreitung derart bestimmt wird, daß die Dauer des AUS-Taktes umso kleiner ist, je größer die Unterschreitung ist, und daß die Umwälzpumpe (3) dauernd eingeschaltet wird, wenn die Außentemperatur einen zweiten Schwellenwert ($T_{S2}$) unterschreitet.

**2.** Verfahren nach Anspruch 1, dadurch gekennzeichnet, daß das Taktverhältnis bestimmt wird durch eine Berechnung einer relativen Pausendauer (ε) gemäß der folgenden Beziehung:

$$\varepsilon = \frac{T_{Ist} - T_{S2}}{T_{S1} - T_{S2}}.$$

**3.** Verfahren nach Anspruch 2, dadurch gekennzeichnet, daß die jeweilige Ausschaltdauer der Umwälzpumpe (3) durch Multiplikation der relativen Pausendauer (ε) mit einer festen oder einstellbaren Taktzeit ($t_{Takt}$) berechnet wird.

**4.** Verfahren nach Anspruch 2, dadurch gekennzeichnet, daß die Einschaltdauer der Umwälzpumpe (3) eine konstante Größe ist.

**5.** Verfahren nach Anspruch 3, dadurch gekennzeichnet, daß die Ausschaltdauer der Umwälzpumpe (3) unabhängig von der Unterschreitung einer der Temperaturschwellen ($T_{S1}$, $T_{S2}$) auf einen Maximalwert ($t_{Pmax}$) begrenzt wird.

**6.** Verfahren nach Anspruch 3, dadurch gekennzeichnet, daß die Ausschaltdauer der Umwälzpumpe (3) auf einen Minimalwert ($t_{Pmin}$) gesetzt wird, wenn der berechnete Wert der Ausschaltdauer kleiner ist als dieser Minimalwert ($t_{Pmin}$).

**7.** Vorrichtung zur Durchführung des Verfahrens nach einem der Ansprüche 1 bis 4 mit einem Heizungsregler (1), der von einem Außentemperaturfühler (2) beeinflußt wird und mindestens einen Sollwertgeber (4, 5) und ein Schaltglied (7) zur Steuerung der Umwälzpumpe (3) aufweist, dadurch gekennzeichnet, daß sie ein Rechenglied (6) enthält, dessen Eingänge mit dem Außentemperaturfühler (2) und den Sollwertgebern (4, 5) für den ersten und den zweiten Schwellenwert ($T_{S1}$, $T_{S2}$) verbunden sind und dessen Ausgang mit dem Schaltglied (7) verbunden ist.

## Claims

**1.** A method of controlling a circulating pump (3) of a heating installation equipped with a heat generator and frost-endangered conduit portions, by means of a heating regulator (1) which is influenced by an external temperature sensor (2) and has at least one reference value generator characterised in that the circulating pump (3) is periodically switched on and off when the external temperature ($T_{Ist}$) falls below a first threshold value ($T_{S1}$), wherein the ON-OFF duty factor is determined by the extent to which the external temperature falls below the first threshold value in such a way that the duration of the OFF-period decreases in proportion to an increasing amount by which the external temperature falls below the first threshold value, and that the circulating pump (3) is continuously switched on when the external temperature falls below a second threshold value ($T_{S2}$).

**2.** A method according to claim 1 characterised in that the duty factor is determined by a calculation of a relative pause duration (ε) in accordance with the following relationship:

$$\varepsilon = \frac{T_{Ist} - T_{S2}}{T_{S1} - T_{S2}}.$$

**3.** A method according to claim 2 characterised in that the respective switch-off duration of the circulating pump (3) is calculated by multiplication of the relative pause duration (ε) by a fixed or adjustable cycle time ($t_{Takt}$).

**4.** A method according to claim 2 characterised in that the switch-on duration of the circulating pump (3) is a constant value.

**5.** A method according to claim 3 characterised in that the switch-off duration of the circulating pump (3) is limited to a maximum value ($t_{Pmax}$) independently of the external temperature falling below one of the temperature thresholds ($T_{S1}$, $T_{S2}$).

**6.** A method according to claim 3 characterised in that the switch-off duration of the circulating pump (3) is set to a minimum value ($t_{Pmin}$) when the calculated value of the switch-off duration is lower than said minimum value ($t_{Pmin}$).

**7.** Apparatus for carrying out the method according to one of claims 1 to 4 having a heating regulator (1) which is influenced by an external temparature sensor (2) and which has at least one reference value generator (4, 5) and a switch member (7) for control of the circulating pump (3), characterised in that th apparatus includes a calculating member (6) whose inputs are connected to the external temperature sensor (2) and the reference value generators (4, 5) for the first and second threshold values ($T_{S1}$, $T_{S2}$) and whose output is connected to the switch member (7).

**Revendications**

1. Procédé pour commander une pompe de circulation (3) d'une installation de chauffage équipée d'un générateur de chaleur et comportant des parties de canalisations exposées au gel, au moyen d'un régulateur de chauffage (1) qui est influencé par un capteur de température extérieure (2) et présente au moins un dispositif de réglage d'une valeur de consigne, caractérisé en ce que la pompe de circulation (3) est périodiquement enclenchée et arrêtée lorsque la température extérieure ($T_{ré}$) descend au-dessous d'un premier seuil de température ($T_{s1}$), le rapport des temps de MARCHE et d'ARRET étant déterminé par la mesure dans laquelle la température extérieure descend au-dessous de ce premier seuil, de manière que la durée du temps d'ARRET soit d'autant plus courte que la baisse de la température extérieure au-dessous du premier seuil est grande et en ce que la pompe de circulation (3) est enclenchée en permanence lorsque la température extérieure descend au-dessous d'un second seuil ($T_{s2}$).

2. Procédé selon la revendication 1, caractérisé en ce que le rapport des temps de marche et d'arrêt est détenniné par le calcul d'une durée de pause relative ($\varepsilon$) selon la relation suivante:

$$\varepsilon = \frac{T_{ré} - T_{s2}}{T_{s1} - T_{s2.}}$$

3. Procédé selon la revendication 2, caractérisé en ce que la durée d'arrêt de la pompe de circulation (3) est calculée chaque fois par multiplication de la durée de pause relative ($\varepsilon$) par un temps élémentaire ($t_{élém}$) fixe ou réglable.

4. Procédé selon la revendication 2, caractérisé en ce que la durée d'enclenchement de la pompe de circulation (3) est une grandeur constante.

5. Procédé selon la revendication 3, caractérisé en ce que la durée d'arrêt de la pompe de circulation (3) est limitée à une valeur maximale ($t_{pmax}$) indépendamment de la baisse de la température extérieure au-dessous d'un des seuils de température ($T_{s1}$, $T_{s2}$).

6. Procédé selon la revendication 3, caractérisé en ce que la durée d'arrêt de la pompe de circulation (3) est fixée à une valeur minimale ($t_{pmin}$) au cas où la valeur calculée de la durée d'arrêt est inférieure à cette valeur minimale ($t_{pmin}$).

7. Dispositif pour la mise en oeuvre du procédé selon une des revendications 1 à 4, comprenant un régulateur de chauffage (1) qui est influencé par un capteur de température extérieure (2) et comporte au moins un dispositif (4, 5) de réglage d'une valeur de consigne et un élément de commutation (7) pour commander la pompe de circulation (3), caractérisé en ce qu'il contient un élément de calcul (6) dont les entrées sont reliées au capteur de température extérieure (2) et aux dispositifs (4, 5) de réglage de valeurs de consigne pour le premier et le second seuil de température ($T_{s1}$, $T_{s2}$), et dont la sortie est reliée à l'élément de commutation (7).

# Fig. 1

# Fig. 2